# EUROPÄISCHE PATENTSCHRIFT

(11) **EP 2 000 786 B1**
(45) Veröffentlichungstag und Bekanntmachung des Hinweises auf die Patenterteilung: **07.11.2018**
(21) Anmeldenummer: 08010254.4
(22) Anmeldetag: 05.06.2008
(51) Int. Cl.: G01J 5/06, G01J 5/08, G01J 5/52, G01J 5/54

(54) **Wärmebildgerät mit Kalibrierfunktionalität**
Thermal imaging device with calibrating functionality
Appareil d'image thermique doté d'une fonction de calibrage

(30) Priorität: 06.06.2007 DE 102007026343
(43) Veröffentlichungstag der Anmeldung: 10.12.2008
(73) Patentinhaber: Rheinmetall Defence Electronics GmbH, 28309 Bremen (DE)
(72) Erfinder: Hartmann, Martin, 28857 Syke (DE)
(74) Vertreter: Greif, Thomas

(56) Entgegenhaltungen:
- EP-A- 0 277 696
- WO-A-00/50931
- WO-A-03/076885
- WO-A-03/089963
- WO-A1-2004/089206
- US-A1- 2005 051 670

## Beschreibung

Die vorliegende Erfindung betrifft ein Wärmebildgerät mit Kalibrierfunktionalität.

Wärmebildgeräte werden zur Erfassung von Wärme abgebenden Objekten verwendet und sind insbesondere bei Dunkelheit vorteilhaft einsetzbar. Ein Wärmebildgerät verfügt üblicherweise über einen Infrarot-Detektor, der eine Vielzahl von Einzelsensoren aufweist, die eindimensional in Zeilen der zweidimensional in einer Fläche angeordnet sind. Dabei ist der Infrarot-Detektor gekühlt, um eine Kontrasterhöhung zu erzielen und das Eigenwärmerauschen zu reduzieren. Ein optisches System dient der Fokussierung und optional zur Veränderung der Brennweite der Wärmebildgerätes.

Aufgrund verschiedener Einflüsse zeigen die Einzelsensoren eines Infrarot-Detektors verschiedene Abbildungseigenschaften. Das bedeutet, dass die Sensoren bei der gleichen Menge einfallender Photonen unterschiedliche elektrische Ausgangssignale erzeugen. Diese Unterschiede müssen im Rahmen einer Kalibrierung gemessen und anschließend korrigiert werden. Da sich die Abbildungseigenschaften der Einzelsensoren des Wärmebildgerätes mit der Zeit ändern können, ist eine wiederkehrende Kalibrierung notwendig, beispielsweise nach jedem Einschalten oder nach längerem Betrieb.

Eine einfache Möglichkeit der Kalibrierung besteht darin, mit dem Infrarot-Detektor eine Fläche mit homogener Temperaturverteilung zu erfassen. Diese Referenzfläche weist bevorzugt die Temperatur des mit dem Wärmebildgerät zu erfassenden Bildbereiche auf. Typischerweise ist diese Temperatur niedriger als die Geräteinnentemperatur, da es innerhalb des Gerätes zur Eigenerwärmung kommt.

Es ist bekannt, zur Kalibrierung die Eigentemperatur des üblicherweise gekühlten Infrarot-Detektors auf den Erfassungsbereich des Detektors zu reflektieren, um dadurch eine Referenzfläche mit einer geringen sogenannten Scheintemperatur zu erzeugen. Wärmebildgeräte mit Würfeleckenreflektoren sind beispielsweise aus den Dokumenten EP 0 277 696 B1 oder WO 03/076885 A1 bekannt.

Das Dokument WO 03/089963 A1 betrifft eine Deckschicht aus Acrylpolymer für eine retroreflektierende Folie. Das Dokument WO 00/50931 A1 offenbart einen retroreflektierenden Gegenstand mit Würfelecken oder Microkugeln.

Die bekannten Reflektoren sind jedoch groß, erfordern eine hohe Präzision bei der Fertigung und erzeugen keine besonders homogene Temperaturverteilung. Es ist daher die Aufgabe der vorliegenden Erfindung, ein Wärmebildgerät mit Kalibrierfunktionalität bereitzustellen, dessen Reflektor die vorgenannten Nachteile nicht aufweist.

Gelöst wird diese Aufgabe durch die Merkmalskombination des Patentanspruchs 1. Vorteilhafte Ausgestaltungsformen sind den abhängigen Patentansprüchen zu entnehmen.

Ein gattungsgemäßes Wärmebildgerät mit Kalibrierfunktionalität weist einen gekühlten Infrarot-Detektor und einen Reflektor zum Reflektieren der Wärmestrahlung des Detektors auf den Erfassungsbereich des Detektors auf. Erfindungsgemäß weist der Reflektor Mikrokugeln auf. Die Mikrokugeln sorgen bei einer geringen Bauhöhe für eine besonders diffuse Reflektion der Wärmestrahlung, sodass der Reflektor eine homogene Scheintemperatur aufweist Die Reflektion erfolgt entweder einfach, also direkt von einer Mikrokugel zurück auf den Detektor, oder über eine mehrfache Reflektion zuerst zwischen zwei oder mehr Mikrokugeln und dann zurück auf den Detektor.

Die Mikrokugeln bestehen beispielsweise aus dem Material Polymethylmetaacrylat (PMMA oder Acrylglas). Derartige Mikrokugeln sind leicht, sodass sich ein geringes Gewicht des Wärmebildgerätes ergibt. Sie sind außerdem transparent für Infrarotstrahlung Im Erfassungsbereich des Wärmebildgerätes, sodass verschiedene Anordnungen der Mikrokugeln möglich sind. Die Kugeln sind bevorzugt in einer einzigen Schicht angeordnet, insbesondere in einer ebenen Fläche.

In einer nicht unter den Schutzumfang der Patentansprüche fallenden Ausgestaltungsform sind die Mikrokugeln auf einer verspiegelten Trägerfolie angeordnet. Die Mikrokugeln sind transparent, bei der Trägerfolie handelt es sich bevorzugt um eine Goldfolie oder eine Folie aus einem anderen geeigneten Metall. Die Mikrokugeln deformieren die Trägerfolie derart, dass die Folie an einem Teil der Kugeloberfläche, einer sogenannten Kugelkappe, an den Mikrokugeln anliegt. Die Mikrokugeln sind demnach in der spiegelnden Trägerfolie eingebettet. Die Reflektion erfolgt an der gekrümmten Grenzfläche zwischen der Mikrokugel und der Trägerfolie. Eine derartige Ausgestaltung des Reflektors eignet sich besonders für Infrarotstrahlung im Wellenlängenbereich zwischen 3µm und 5µm.

In einer Ausgestaltungsform der Erfindung sind die Mikrokugeln auf einer Trägerfolie angeordnet und mit einer Goldbedampfung versehen. Die Goldbedampfung der Mikrokugeln bewirkt bevorzugt eine geschlossene Goldschicht mit stellenweise gewölbter Oberfläche. Dabei sind nicht nur die Oberflächen der Mikrokugeln mit der Goldschicht versehen, sondern die Goldschicht setzt sich auch in den Kugelzwischenräumen fort. Eine derartige Ausgestaltung des Reflektors eignet sich besonders für Infrarotstrahlung im Wellenlängenbereich zwischen 8µm und 12µm.

Bevorzugt weisen die Mikrokugeln unterschiedliche Durchmesser auf, zum Beispiel zwischen 50µm und 90µm, beispielsweise mit einem mittleren Kugeldurchmesser von 70µm. Durch die unterschiedlichen Kugelgrößen im Reflektor wird die Reflektion besonders diffus und die Scheintemperatur des Reflektors besonders homogen. Eine Variation der Durchmessergrößen verhindert insbesondere Beugungsmuster auf der Detektorfläche.

Weiterhin bevorzugt berühren sich jeweils mindestens zwei benachbarte Mikrokugeln. Dadurch wird eine besonders gut reflektierende Oberfläche geschaffen, die darüber hinaus eine höhere mechanische Stabilität aufweist.

Bevorzugt weist das Wärmebildgerät Mittel zum Einbringen des Reflektors in den Strahlengang des Wärmebildgerätes auf. Dabei handelt es sich beispielsweise um einen Arm, an dem der Reflektor angeordnet ist, der in den Strahlengang eingeschwenkt oder verfahren wird. Mögliche Positionen des Reflektors sind zwischen dem Infrarot-Detektor und dem optischem System, innerhalb des optischen Systems, beispielsweise zwischen zwei Linsen, oder noch vor der Frontlinse des optischen Systems. Die Frontlinse ist die optisch am weitesten vom Infrarot-Detektor entfernte Linse des optischen Systems.

In einer alternativen Ausgestaltungsform ist der Infrarot-Detektor auf den Reflektor ausrichtbar. Dabei ist der Reflektor ortsfest in dem Wärmebildgerät angeordnet und der Infrarot-Detektor wird beispielsweise auf den Reflektor verschwenkt. Optional wird auch das optische System ganz oder teilweise mit auf den Reflektor ausgerichtet.

Optional weist das Wärmebildgerät ein Heizelement zur Erwärmung des Reflektors auf. Dadurch kann die Scheintemperatur des Reflektors erhöht werden, wodurch beispielsweise Kalibriermessungen bei unterschiedlichen Temperaturniveaus ermöglicht werden. Bei dem Heizelement handelt es sich beispielsweise um ein Peltierelement, einen Heizdraht oder eine Heizfolie.

Weiterhin optional ist der Abstand des Reflektors vom Detektor variabel. Mit dem Abstand des Reflektors vom Detektor ändern sich die Reflektionseigenschaften, sodass sich die Wärmestrahlungsintensität auf den Detektor regulieren lässt. Insbesondere ändert sich das Verhältnis der aus der Umgebung auf den Detektor reflektierten Infrarotstrahlung zu der vom Detektor stammenden und auf den Detektor zurückreflektierten Infrarotstrahlung. Somit sind Kalibriermessungen bei unterschiedlichen Temperaturniveaus möglich, ohne den Reflektor zu erwärmen.

Die vorliegende Erfindung soll anhand eines Ausführungsbeispiels näher erläutert werden. Dabei zeigt
- Figur 1: ein Wärmebildgerät mit einem Reflektor aus Mikrokugeln,
- Figur 2: eine hexagonale Anordnung von Mikrokugeln
- Figur 3: eine erste Ausführungsform des Reflektors und
- Figur 4: eine zweite, nicht unter den Schutzumfang der Patentansprüche fallende Ausführungsform des Reflektors.

Das Wärmebildgerät 1 in besteht im Wesentlichen aus einem Infrarot-Detektor 8 mit einer Vielzahl von Einzeldetektoren, einem nicht dargestellten optischen System und einem Reflektor 12 für Wärmestrahlung. Das optische System dient der Fokussierung und optional zur Einstellung der Brennweite des Wärmebildgerätes 1. Der Infrarot-Detektor 8 wird mittels eines in den Figuren nicht dargestellten Kühlsystems gekühlt. Die Pfeile in den Figuren symbolisieren den Strahlengang der Wärmestrahlung. Gleiche Elemente sind in den Figuren mit gleichen Bezugszeichen versehen.

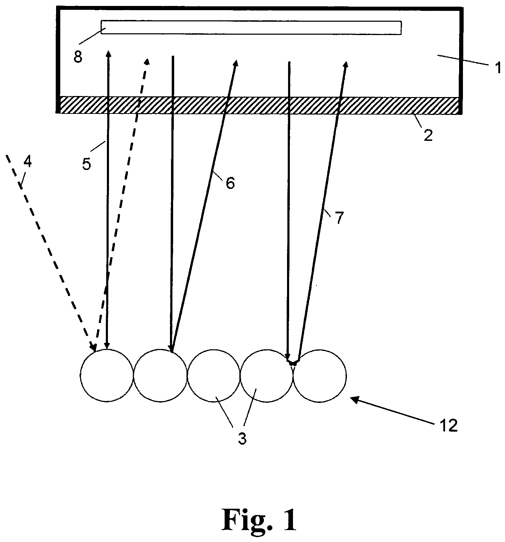

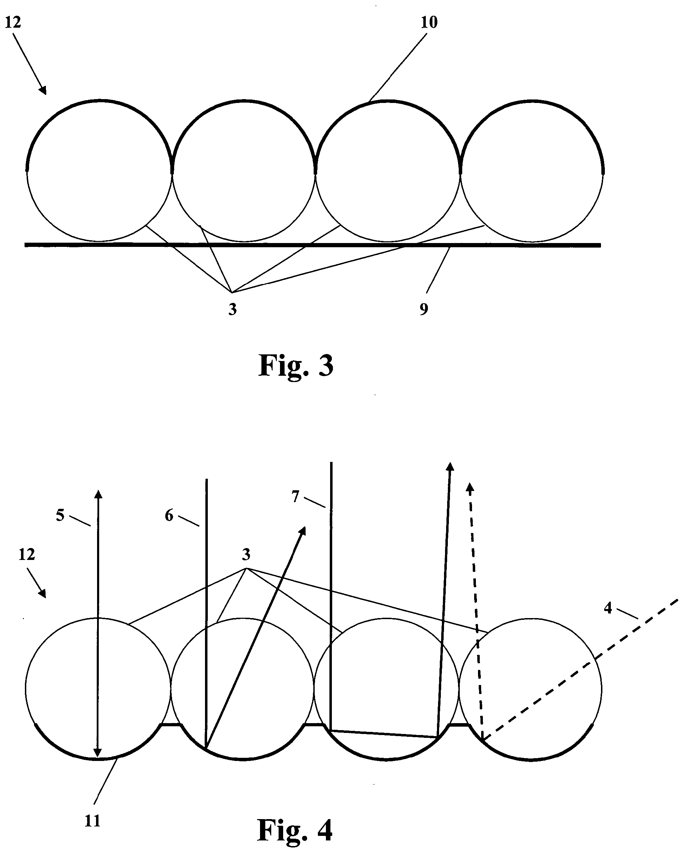

Der Reflektor 12 in Figur 1 besteht aus Mikrokugeln 3, die auf einer Trägerfolie 9 angeordnet und mit einer Goldbedampfung 10 versehen sind (siehe Figur 3). Die Goldbedampfung 10 überdeckt die dem Detektor 8 zugewandten Oberflächenteile der Mikrokugeln 3 und diejenigen Teile der Trägerfolie 9, welche nicht von Kugeln bedeckt sind. Die Goldbedampfung 10 reflektiert aufgrund ihrer Oberflächenform die Wärmestrahlung des Infrarot-Detektors 8, die aus einer Öffnung 2 des Wärmebildgerätes 1 austritt, diffus auf den Infrarot-Detektor 8 zurück. Die Reflektion findet an der dem Detektor 8 zugewandten Seite der Mikrokugeln 3 statt.

Die durch den Pfeil 5 angedeutete Strahlung wird in sich selbst direkt auf den Detektor 8 zurückreflektiert. Die durch den Pfeil 6 angedeutete Strahlung wird direkt auf einen anderen Punkt des Detektors 8 als ihren Ausgangspunkt zurückreflektiert. Die durch den Pfeil 7 angedeutete Strahlung wird zunächst von einer ersten Kugel 3 auf eine zweite Kugel 3 und von dort auf den Detektor 8 reflektiert. Die durch den Pfeil 4 angedeutete Strahlung aus der Umgebung wird ebenfalls auf den Detektor 8 reflektiert.

Der Reflektor 12 reflektiert die Wärmestrahlung, also Infrarotstrahlung, des gekühlten Infrarot-Detektors 8 und damit die Eigentemperatur des Detektors in den Erfassungsbereich des Detektors 8 zurück. Für den Infrarot-Detektor 8 weist der Reflektor 12 eine homogene Scheintemperatur auf, die unterhalb der tatsächlichen Temperatur des Reflektors 12 des Wärmebildgerätes 1 liegt.

Bei der Kalibriermessung liest eine nicht dargestellte Elektronik die Ausgangswerte der Einzelsensoren des Infrarot-Detektors 8 aus. Aus den Ausgangswerten berechnet die Elektronik Korrekturparameter für eine Korrekturfunktion. Die Korrekturfunktion errechnet aus diesen Parametern und den Ausgangswerten der Einzelsensoren des Infrarot-Detektors 8 ein homogenes Wärmebild. Die so ermittelten Korrekturparameter werden im Betrieb des Wärmebildgerätes 1 zur Korrektur der Ausgangswerte des Infrarot-Detektors 8 verwendet.

Nach der Kalibrierung wird der Reflektor 12 aus dem Erfassungsbereich des Wärmebildgerätes 1 entfernt. Dazu sind entsprechende Mittel im Wärmebildgerät vorgesehen, die in den Figuren nicht dargestellt sind.

Optional ist an dem Reflektor 12 ein Heizelement angeordnet. Wird das Heizelement eingeschaltet, so erwärmt dieses den Reflektor 12. Dies erzeugt eine zusätzliche Wärmestrahlung, die bei der Kalibriermessung auf den Infrarot-Detektor 8 auftrifft. Die Scheintemperatur des Reflektors 12, die der Infrarot-Detektor 8 erfasst, ist höher als bei nicht eingeschaltetem Heizelement. Mit Hilfe des Heizelementes sind daher Kalibriermessungen bei verschiedenen Scheintemperaturen durchführbar.

Alternativ lassen sich Kalibriermessungen bei verschiedenen Scheintemperaturen durchführen, indem der Abstand des Reflektors 12 vom Infrarotdetektor 8 variiert wird. Zur Änderung des Abstandes werden entweder die Mittel verwendet, die auch zur Entfernung des Reflektors 12 aus dem Erfassungsbereich des Wärmebildgerätes dienen, oder separate Mittel.

Die Figur 4 zeigt eine alternative Ausgestaltungsform des Reflektors 12, bei dem transparente Mikrokugeln 3 aus Acrylglas in eine Goldfolie 11 eingebettet sind. Die Mikrokugeln 3 deformieren die Oberfläche der Folie 11, sodass die Folie 11 eng an den Oberflächen der Mikrokugeln anliegt und dadurch Kugelkappen bildet. Die Reflektion findet an der dem Detektor 8 abgewandten Seite der Mikrokugeln 3, am Übergang zwischen den Mikrokugeln 3 und der Goldfolie 11, statt.

Die durch den Pfeil 5 angedeutete Strahlung wird in sich selbst direkt auf den Detektor 8 zurückreflektiert. Die durch den Pfeil 6 angedeutete Strahlung wird direkt auf einen anderen Punkt des Detektors 8 als ihren Ausgangspunkt zurückreflektiert. Die durch den Pfeil 7 angedeutete Strahlung wird zunächst von einem ersten Punkt der Kugelkappe auf einen zweiten Punkt der Kugelkappe und von dort auf den Detektor 8 reflektiert. Die durch den Pfeil 4 angedeutete Strahlung aus der Umgebung wird ebenfalls auf den Detektor 8 reflektiert.

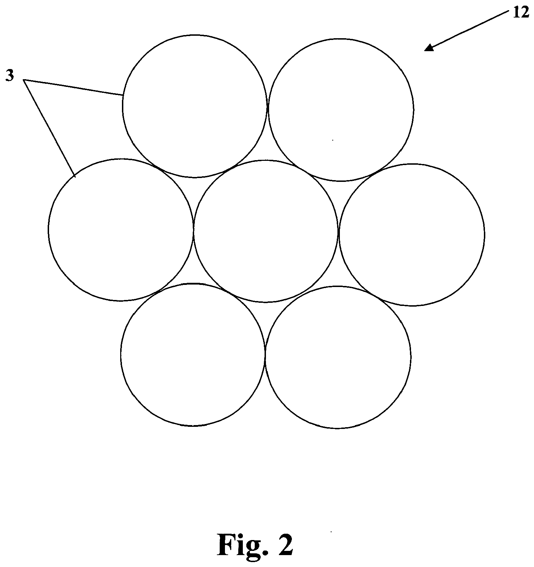

Die Figur 2 zeigt eine beispielhafte hexagonale Anordnung der Mikrokugeln 3, wie sie in den beiden vorstehend beschriebenen Ausführungsbeispielen des Reflektors 12 verwendet wird. Bei einer derartigen Anordnung wird die Größe der Kugelzwischenräume minimiert, was eine maximale Diffusität der reflektierten Wärmestrahlung erzeugt.

## Patentansprüche

1. Wärmebildgerät (1) mit Kalibrierfunktionalität, aufweisend einen gekühlten Infrarot-Detektor (8) und einen Reflektor (12) zum Reflektieren der Wärmestrahlung des Detektors (8) auf den Erfassungsbereich des Detektors (8), **dadurch gekennzeichnet, dass** der Reflektor Mikrokugeln (3) aufweist, der Abstand des Reflektors (12) vom Detektor (8) variabel ist und die Mikrokugeln (3) auf einer Trägerfolie (9) angeordnet und mit einer Goldbedampfung (10) versehen sind, wobei die Goldbedampfung (10) die dem Detektor (8) zugewandten Oberflächenteile der Mikrokugeln (3) und diejenigen Teile der Trägerfolie (9), welche nicht von den Kugeln bedeckt sind, überdeckt.

2. Wärmebildgerät (1) nach Anspruch 1 **dadurch gekennzeichnet, dass** die Mikrokugeln (3) einen Durchmesser zwischen 50µm und 90µm aufweisen.

3. Wärmebildgerät (1) nach einem der Ansprüche 1 oder 2, **dadurch gekennzeichnet, dass** sich jeweils mindestens zwei benachbarte Mikrokugeln (3) berühren.

4. Wärmebildgerät (1) nach einem der Ansprüche 1 bis 3, **gekennzeichnet durch** Mittel zum Einbringen des Reflektors (12) in den Strahlengang des Wärmebildgerätes (1).

5. Wärmebildgerät (1) nach einem der Ansprüche 1 bis 4, **dadurch gekennzeichnet, dass** der Infrarot-Detektor (8) auf den Reflektor (12) ausrichtbar ist.

6. Wärmebildgerät (1) nach einem der Ansprüche 1 bis 5, **gekennzeichnet durch** ein Heizelement zur Erwärmung des Reflektors (12).

## Claims

1. Thermal imaging device (1) with calibrating functionality, comprising a cooled infrared detector (8) and a reflector (12) for reflecting the thermal radiation of the detector (8) onto the detecting area of the detector (8), **characterized in that** the reflector comprises microspheres (3), the distance of the reflector (12) from the detector (8) is variable and the microspheres (3) are arranged on a carrier film (9) and are provided with a vapour-deposited gold coating (10), wherein the vapour-deposited gold coating (10) covers over the parts of the surface of the microspheres (3) that are facing the detector (8) and those parts of the carrier film (9) that are not covered by the spheres.

2. Thermal imaging device (1) according to Claim 1, **characterized in that** the microspheres (3) have a diameter of between 50 µm and 90 µm.

3. Thermal imaging device (1) according to either of Claims 1 and 2, **characterized in that** at least two adjacent microspheres (3) respectively touch.

4. Thermal imaging device (1) according to one of Claims 1 to 3, **characterized by** means for introducing the reflector (12) into the path of rays of the thermal imaging device (1).

5. Thermal imaging device (1) according to one of Claims 1 to 4, **characterized in that** the infrared detector (8) can be aligned with the reflector (12).

6. Thermal imaging device (1) according to one of Claims 1 to 5, **characterized by** a heating element for heating the reflector (12).

## Revendications

1. Appareil à image thermique (1), doté d'une fonctionnalité de calibrage, comportant un détecteur à infra-rouge (8) refroidi et un réflecteur (12), destiné à réfléchir le rayonnement thermique du détecteur (8) sur la zone de détection du détecteur (8), **caractérisé en ce que** le réflecteur comporte des microsphères (3), **en ce que** l'écart entre le réflecteur (12) et le détecteur (8) est variable et **en ce que** les microsphères (3) sont placées sur un film porteur (9) et sont munies d'une couche d'or vaporisée (10), la couche d'or vaporisée (10) recouvrant les parties superficielles des microsphères (3) qui font face au détecteur (8) et les parties du film porteur (9), qui ne sont pas couvertes par les sphères.

2. Appareil à image thermique (1) selon la revendication 1, **caractérisé en ce que** les microsphères (3) présentent un diamètre compris entre 50 µm et 90 µm.

3. Appareil à image thermique (1) selon l'une quelconque des revendications 1 ou 2, **caractérisé en ce que** chaque fois au moins deux microsphères (3) voisines se touchent.

4. Appareil à image thermique (1) selon l'une quelconque des revendications 1 à 3, **caractérisé par** des moyens destinés à introduire le réflecteur (12) dans la trajectoire du faisceau de l'appareil à image thermique (1).

5. Appareil à image thermique (1) selon l'une quelconque des revendications 1 à 4, **caractérisé en ce que** le détecteur à infra-rouge (8) est orientable sur le réflecteur (12).

6. Appareil à image thermique (1) selon l'une quelconque des revendications 1 à 5, **caractérisé par** un élément chauffant, destiné à réchauffer le réflecteur (12).
